# EUROPEAN PATENT SPECIFICATION

(11) **EP 1 944 535 B1**
(45) Date of publication and mention of the grant of the patent: **14.11.2012**
(21) Application number: 07124100.4
(22) Date of filing: 27.12.2007
(51) Int. Cl.: F16K 11/087

(54) **Thermal conditioning system, distribution unit and valve for said system, and method for the thermal conditioning of a building with said system**
Wärmekonditionierungssystem, Verteilereinheit und Ventil für dieses System sowie Verfahren zur Wärmekonditionierung eines Gebäudes mit diesem System
Système de conditionnement thermique, unité de distribution et soupape pour ce système, et procédé pour le conditionnement thermique d'un immeuble avec ce système

(30) Priority: 09.01.2007 IT TO20070013
(43) Date of publication of application: 16.07.2008
(73) Proprietor: Ferrero, Riccardo, 12060 Farigliano (CN) (IT)
(72) Inventor: Ferrero, Riccardo, 12060 Farigliano (CN) (IT)
(74) Representative: Robba, Pierpaolo

(56) References cited:
- EP-A1- 0 427 655
- WO-A1-2005/010415
- DE-U1- 8 615 858
- FR-A1- 2 634 873
- US-A1- 2005 034 771

## Description

### Field of the invention

The present invention relates to a thermal conditioning (air conditioning) system for cogeneration of a conditioning fluid, such as hot or cold water for a heating and/or cooling system, and of an expendable fluid, such as sanitary hot water. The present invention further relates to a distribution unit and a distribution valve for building said system.

More specifically the present invention relates to a distribution valve according to the preamble of claim 1.

### State of the art

One of the goals considerably impacting on the design of the current heating, air conditioning and sanitary water distribution systems in residential buildings is energy saving. Such a goal can be pursued by operating in multiple directions.

A first direction is the choice among centralised and individual heating systems

In the practice, at present there is a tendency to prefer individual heating solutions, i.e. with a hot water generator for each family: actually, contrary to centralised heating systems, such solutions, by using presently cheap engineering technologies, allow precisely debiting each family with the costs of the heat amount that has been consumed. This induces the individual users to avoid useless waste.

Yet, a centralised heating system potentially offers, as a general rule, a higher thermal efficiency in respect of the yield and the management of the hot water generator, for instance a burner - boiler assembly, heating hot water for feeding the whole system.

A second direction is the choice of the kind of heating elements heating the rooms.

Recently, diffusion of heating systems employing radiating panels, installed in the floor, in the walls or in the ceiling, has increased again, since such systems allow attaining the same comfort as that offered by systems employing radiators but with lower consumptions. Another advantage of the systems employing radiating panels is the possibility of cooling the rooms in summer.

However, systems employing radiating panels have the drawback of a considerable thermal inertia, i.e. a considerable slowness in heating an initially cold room, not heated to steady state temperature.

A third direction is the use of systems for cogeneration of heating water and sanitary hot water, the latter being delivered at generally lower temperatures than heating water. By such systems, sanitary water is heated to the predetermined delivery temperature in an exchanger transferring thereto part of the thermal energy of the heating water that, generally, is delivered by a burner or another source at higher temperatures, indicatively in the range 70°C to 75°C. As a general rule, such systems allow more efficiently exploiting the thermal energy produced by the burner or other source of hot water at high temperature.

It is an object of the present invention to allow, or anyway to make easier, by means of relatively simple and cheap technologies, constructing systems for heating, cooling and possibly producing sanitary hot water, which incorporate the advantages provided by the different kinds of systems described above.

One example of a distribution valve according to the prior art is shown in WO2005/010415A1, showing the features of the preamble of claim 1 and which discloses a multiport valve comprising a valve housing in which a valve member is located that can be twisted by means of a handle an adjusting spindle. The valve housing is embodied with three connections that respectively extend at a right angle from each other while the valve member is configured with an uninterrupted bore and a transversal bore that is adjacent thereto. The valve member can be twisted by 360 GEG relative to the valve housing. A portion of the valve member, which is located outside the valve housing, or the handle that is arranged thereupon is provided with at least one mark by means of which the rotational position of the valve member is indicated.

### Summary of the invention

The above object is achieved, according to a first aspect of the present invention, by a distribution valve having the features as claimed in claim 1.

In a particular embodiment, the valve according to the invention includes a logic unit arranged to operate the movable shutter through the actuator according to the detection of physical and/or chemical parameters of the fluid upstream and/or downstream and/or within the valve, and the detection of physical and/or chemical parameters of the fluid upstream and/or downstream and/or within the valve includes detecting the fluid temperature.

In a particular embodiment, the logic unit implements a control process comprising the following steps:
- detecting a physical and/or chemical parameter of the fluid upstream and/or downstream and/or within the valve;
- if the detected physical and/or chemical parameter is below a predetermined minimum threshold value, rotating the movable shutter in a first predetermined direction;
- if the detected physical and/or chemical parameter exceeds a predetermined maximum threshold value, rotating the movable shutter in a second predetermined direction.

In a particular embodiment, the logic unit implements a control process comprising the step of stopping the movable shutter if the detected physical and/or chemical parameter takes a predetermined ideal value or falls within a predetermined range of tolerable values.

In a particular embodiment, the position detector includes an element chosen out of the following group: an end-of-stroke detector, a contact detector, a proximity detector.

In a particular embodiment, the position detector includes a lever or a mechanical pushbutton the cam profile is arranged to act upon.

In a particular embodiment, the logic unit has a plurality of signal gates, and the valve includes a plurality of signal lines each arranged to be reversibly connectable to one of the signal gates, wherein the responses of the logic unit to information supplied by the position detector change as the connections between the signal lines and the signal gates change.

According to a second aspect of the invention, such object is achieved by means of an air conditioning system having the features as claimed in claim 15.

In a particular embodiment of the system according to the invention, a first air conditioning terminal includes a radiator and/or a towel heater, and a second air conditioning terminal includes a wall, floor or ceiling radiating panel and/or a warm air or cold air generator.

In a particular embodiment of the system according to the invention, a first air conditioning terminal includes a wall, floor or ceiling radiating panel, and a second air conditioning terminal includes a radiator and/or a towel heater and/or a warm air or cold air generator.

In a particular embodiment of the system according to the invention, a first air conditioning terminal includes a warm air or cold air generator, and a second air conditioning terminal includes a radiator and/or a towel heater and/or a wall, floor or ceiling radiating panel.

In a particular embodiment, the system according to the invention is arranged to provide a user, external to the system itself, with an expendable fluid at a temperature substantially lower than the temperature at which the distribution unit delivers the conditioning fluid to a conditioning terminal for heating a room.

In a particular embodiment of the system according to the invention, the shutter of one of the distribution valves is arranged to select and enable simultaneous delivery of conditioning fluid to two conditioning terminals.

In a particular embodiment of the system according to the invention, the shutter of one of the distribution valves is arranged to select and enable simultaneous delivery of conditioning fluid to a conditioning terminal and to the heat exchanger or other sanitary generator.

In a particular embodiment of the system according to the invention, the shutter of one of the distribution valves is a slide shutter.

In a particular embodiment of the system according to the invention, the shutter of one of the distribution valves internally defines two intersecting channels, and/or two channels intersecting so as to form a T, and/or two channels intersecting so as to form an X, and/or an L-shaped channel and/or a channel with a bend and/or two channels forming a double L without intersecting.

In a particular embodiment of the system according to the invention, both the shutter arranged to switch the flow of the conditioning fluid towards the other movable shutter, and the other movable shutter internally define two intersecting channels, and/or two channels intersecting so as to form a T.

In a particular embodiment of the system according to the invention, the shutter arranged to switch the flow of the conditioning fluid towards the other movable shutter internally defines an L-shaped channel and/or two channels forming a double L without intersecting, and the other movable shutter internally defines two intersecting channels and/or two channels intersecting so as to form a T.

In a particular embodiment, the system according to the invention includes an actuator arranged to operate the shutter of one of the distribution valves.

In a particular embodiment, the actuator includes an electric motor.

In a particular embodiment, the system according to the invention includes a manifold fed by one of the distribution valves and arranged to supply a conditioning terminal with the conditioning fluid.

In a particular embodiment, in the system according to the invention the shutter of one of the distribution valves is substantially a ball shutter.

In a particular embodiment, in the system according to the invention, the shutter of one of the distribution valves is a rotary shutter.

In a particular embodiment of the distributing unit according to the invention, the distribution container includes an element chosen out of the following group: a metal box, a box of plastic material, a wing or other door that can be opened, a removable cover, wherein the wing, the door or the cover protect and enable access to one of the distribution valves and/or the heat exchanger or other sanitary generator.

In a particular embodiment of the distributing unit according to the invention, the distribution container houses a manifold arranged to have a plurality of ducts connected thereto to feed a plurality of conditioning terminals.

The advantages afforded by the present invention will become more apparent, for the skilled in the art, from the following detailed description of a particular and non limiting exemplary embodiment, given with reference to the following schematic Figures.

### List of the Figures

Fig. 1 is the hydraulic diagram of a first exemplary embodiment of an air conditioning system according to the present invention;
Fig. 2 shows a detail of the distribution valves of the system shown in Fig. 1;
Figs. 3A to 3F show the positions of the rotary shutters of the upstream and downstream distribution valves of the system shown in Fig. 1, in some conditions of use of the same system;
Fig. 4 is a perspective view of one of the distribution valves of the system shown in Fig. 1;
Fig. 5 is a functional electric diagram of the valve shown in Fig. 4;
Fig. 6 is the hydraulic diagram of a second exemplary embodiment of an air conditioning system according to the present invention;
Figs. 7A to 7E show the positions of the rotary shutters of the upstream and downstream distribution valves of the system shown in Fig. 6, in some conditions of use of the same system;
Fig. 8 shows a variant embodiment of a distribution valve that can be used in a system according to the present invention;
Figs. 9 to 12 show four operating configurations of a second embodiment of a distribution and mixing valve according to the invention;
Fig. 13 shows the control and actuating system of the valve shown in Figs. 9 to 12.

### Detailed description

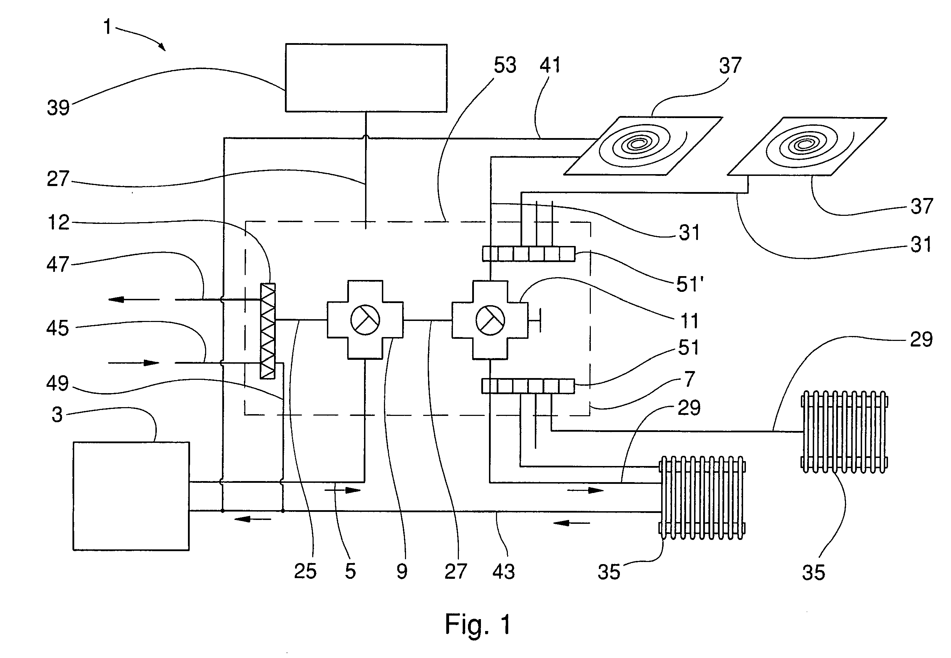

Fig. 1 shows a first exemplary embodiment of a system for heating/cooling a housing space, such as a flat or an office, as well as for producing sanitary hot water, according to the invention.

Such system, generally denoted by reference numeral 1, comprises a generator 3 of hot water for the heating - which generator can be for instance a burner - boiler assembly of a type known per se or a connection to a remote heating network external to system 1 - or a more generic source of a conditioning fluid.

Through a delivery duct 5, generator 3, also referred to in the present description as "generator of high temperature water", supplies a distribution unit, enclosed within dashed lines in the drawing and denoted by reference numeral 7, with "high temperature" hot water, i.e. water heated for heating purposes e. g. to a temperature of 70°C to 75°C, or 60°C to 90-100°C. Distribution unit 7 can be for instance a metal or plastic box, or another kind of container, built into a wall of the building to be heated.

In the present exemplary embodiment, unit 7 houses upstream distribution valve 9, downstream distribution valve 11 and heat exchanger 12. In the present exemplary embodiment, distribution valves 9 and 11 are four-way, rotary shutter distribution valves.

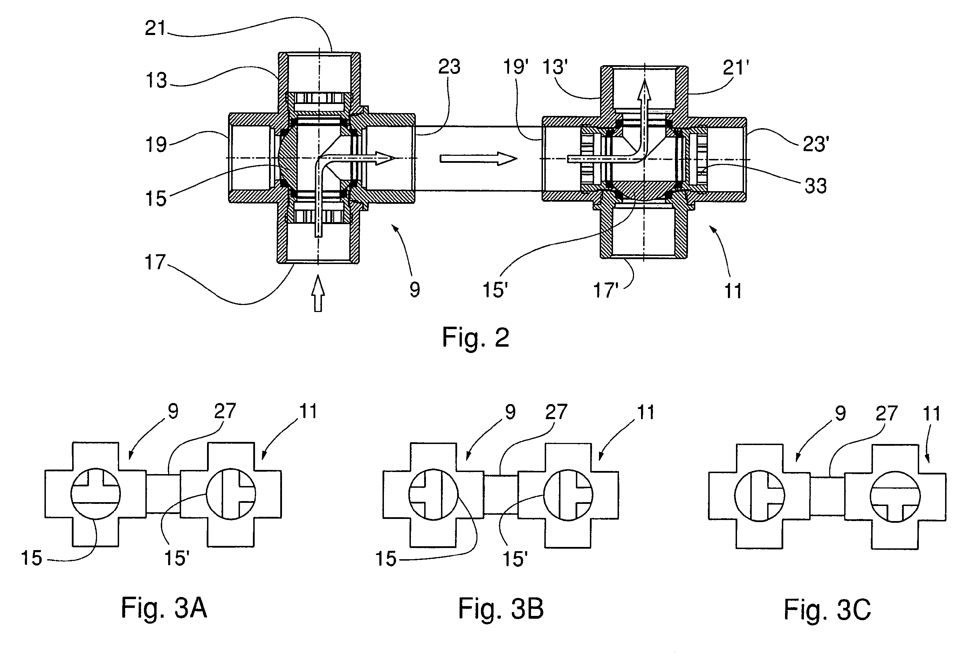

As shown in Fig. 2, distribution valves 9 and 11 can comprise an external valve body 13 internally enclosing a rotary shutter 15, for instance in the shape of a spherical or cylindrical body. In the exemplary embodiment shown in Figs. 1 and 2, two ducts are formed within rotary shutter 15, and they intersect so as to form substantially a T. External valve body 13 defines four connection ports 17, 19, 21, 23 substantially arranged in a cross so that rotary shutter 15, by rotating through multiples of 90°, puts the ducts connected to three of the four connection ports 17, 19, 21, 23 into mutual fluidic communication and closes the fourth duct.

In the exemplary embodiment shown in Figs. 1 and 2, in upstream distribution valve 9, valve port 17 is connected to supply duct 5, port 19 is connected to duct 25 feeding heat exchanger 12, port 21 opposite port 17 is connected to supply duct 27 (also referred to as "intervalve duct" 27), and port 23, opposite port 19, is connected to intervalve duct 27 feeding valve 11.

In downstream distribution valve 11, port 17' is connected to delivery duct 29, port 19' is connected to supply duct 27, port 21' opposite port 17' is connected to delivery duct 31 and port 23' opposite port 19' is closed for instance by a threaded cap 33.

In Fig. 1, reference numerals 35 denote each one or more radiators, or similar heating elements, fed with heating hot water coming from valve 11 through ducts 29. Reference numerals 37 denote each one or more wall, floor or ceiling radiating panels, of a kind known per se, fed with heating hot water coming from valve 11 through ducts 31. Reference numerals 51, 51' denote each a distribution manifold from which multiple ducts 29 and 31, respectively, branch off. Manifolds 51 and 51' can be for instance modular manifolds such as the manifolds disclosed in International Patent Application WO 2006/097892. Reference numeral 39 denotes a source of cold water, or generally water not heated on purpose, such as a branch of a water system, feeding valve 9 through duct 27. Reference numerals 41, 43 denote the return ducts from radiator(s) 35 and radiating panel(s) 37, respectively.

Heat exchanger 12 can be for instance a plate heat exchanger, of a type known per se. Referring to Fig. 1, exchanger 12 is connected to supply ducts 25 and 45, delivery duct 47 and return duct 49. Duct 25 conveys water coming from valve 9 to heat exchanger 12. Duct 45 conveys cold water to be heated for sanitary use, e.g. for heating or washing, to the heat exchanger, and duct 47 conveys sanitary hot water, heated by the heat exchanger thanks to the heat supplied by heating hot water in duct 25, to utilising devices, such as for instance taps of domestic kitchens or baths, not shown. According to an embodiment, both distribution valves 9, 11 are housed within a distribution box 53 (Fig. 1), made for instance as a metal or plastic box with a front door that can be opened. According to an embodiment box 53, also referred to as "distribution container" 53, can internally house also manifolds 51 and 51' and/or heat exchanger 12 or another component, if any, for production of sanitary hot water. Box 53 can be for instance built into a wall of the building to be heated, for instance internally or externally of a flat, a residential housing or an office, near the entrance room, thereby contributing to heat the same entrance room.

According to an embodiment, box 53 with distribution valves 9, 11 and/or manifolds 51, 51' and/or heat exchanger 12 or other components, if any, for production of sanitary hot water housed therein, can be supplied to installers or retailers as a unit already previously assembled; in the alternative, the systems described above can be built by buying distribution valves 9 and 11, manifolds 51 and 51', heat exchanger 12 and other components as separate elements and assembling them.

The operation of system 1 is as follows.

When the rotary shutters are arranged as shown in Fig. 3A, neither production of sanitary hot water nor heating of rooms occur: actually, upstream distribution valve 9 prevents inflow of heating water, coming from heating water generator 3, towards the rest of the system, whereas downstream distribution valve 11 prevents inflow of relatively cold water, coming from cold water source 39, towards radiators 35 and radiating panels 37.

It is to be appreciated that a non-negligible saving of thermal energy occurs in this manner, since a useless dispersion of the heat of heating water through the same body 13 of valve 9, ducts 25 and 27, heat exchanger 12 and downstream valve 11 is avoided.

When the rotary shutters are arranged as shown in Fig. 3B, production of sanitary hot water only takes place: actually, upstream distribution valve 9 directs heating water, coming from heating water generator 3, to heat exchanger 12 only. Valves 9 and 11 prevent radiators 35 and radiating panels 37 from being fed with heating water, and the position of shutter 15 of valve 9 prevents heating water from reaching duct 27 and downstream distribution valve 11, thereby avoiding useless heat dispersions.

When the rotary shutters are arranged as shown in Fig. 3C, the only heating of the rooms through radiators 35 takes place, without cogeneration of sanitary hot water, and useless dispersion of the heat of heating water through duct 25 and heat exchanger 12 is avoided.

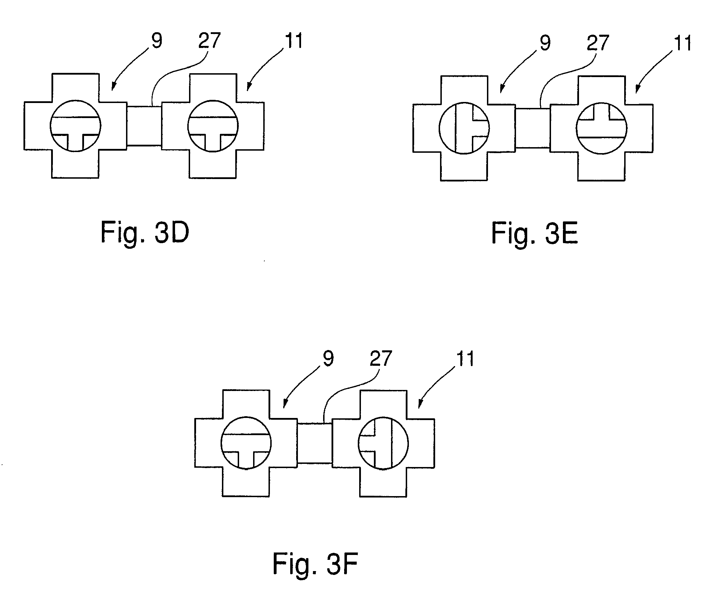

When the rotary shutters are arranged as shown in Fig. 3D, both heating of the rooms through radiators 35 only and cogeneration of sanitary hot water are achieved.

When the rotary shutters are arranged as shown in Fig. 3E, the only heating of the rooms through radiating panels 37 takes place, without cogeneration of sanitary hot water.

When the rotary shutters are arranged as shown in Fig. 3F, heating of the rooms through radiators 35 and radiating panels 37 and cogeneration of sanitary hot water take place simultaneously. This configuration can for instance be useful when it is desired to heat a residential flat, to have hot water available for having a wash and to bring a bathroom to higher temperature for taking a bath or a shower: by means of system 1 described above, it is possible to activate, besides radiating panels 37 ensuring a continuous and constant heating of the whole flat, also radiators 35 in the bathroom, which have a far lower thermal inertia and a far shorter response time than panels 37, for the short time e.g. of a shower.

Clearly, also other combinations of the positions of rotary shutters 15, 15' of valves 9, 11, respectively, are possible, in order to achieve other operation modes.

Distribution valves 9 and 11 can be manually driven, or, more advantageously, they can be driven by electric motors or other actuators, based on the control signals coming e.g. from thermostats, flow switches or other logic units for the automatic control.

It is apparent from the above description that the present invention allows constructing relatively complex combined systems for heating and sanitary hot water production, which systems limit thermal dispersion in the system itself, incorporate different types of heating elements, e.g. floor panels or radiators, as well as systems for cogeneration of heating hot water, possibly at "high temperature", and sanitary hot water, possibly at "low temperature", and can provide relatively complex operation modes and combinations while being managed in very free and simple manner, by means of relatively cheap control systems.

Moreover, use of two valves with rotary shutters, where one valve is located downstream the other or, more generally, where a rotary shutter is located downstream the other in the circuit, enables achieving the great number of operation modes described above in very simple and cheap manner. Actually, if one would implement by means of a single valve with sliding drawer the eight operation modes of the system shown in Fig. 1, six of which have been described above, a three-way, eight-position valve should be employed, as shown by the following table 1.

**TABLE 1**

| Heating radiating panels | Sanitary hot water | Radiators |
|---|---|---|
| ON | OFF | OFF |
| ON | OFF | ON |
| ON | ON | OFF |
| ON | ON | ON |
| OFF | OFF | OFF |
| OFF | OFF | ON |
| OFF | ON | OFF |
| OFF | ON | ON |

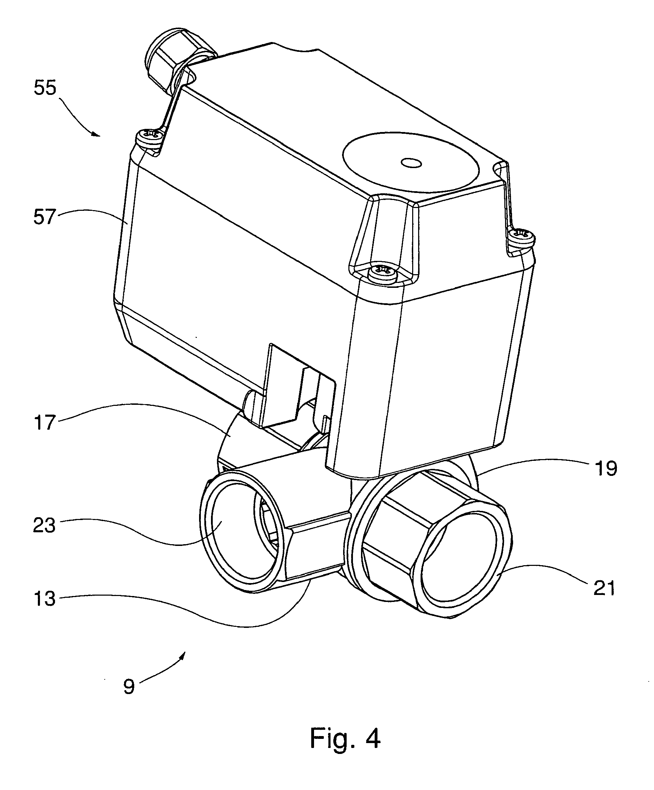

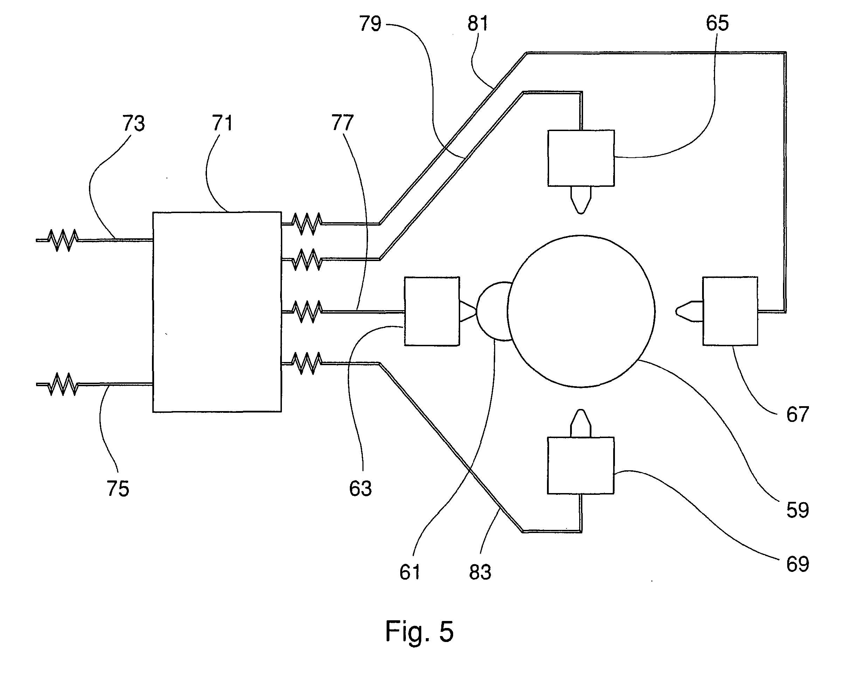

Figs. 4 and 5 show a first particular embodiment of an upstream or a downstream distribution valve 9 or 11, which can be used in a system according to the present invention.

Reference numeral 55 (Fig. 4) generally denotes an actuator, e.g. an electrical actuator, for operating rotary shutter 15 of ball valve 9. Actuator 55 includes a housing 57, e. g. of plastic material, enclosing an electric motor and the relevant speed reducer (not shown), acting on a shaft 59 (fig. 5) integral or generally mechanically coupled with rotary shutter 15 of the valve. A cam 61, e.g. formed as a projection, is provided on shaft 59, whereas a plurality of end-of-stroke or contact or proximity detectors 63, 65, 67 and 69 are provided around shaft 59, on a suitable support integral with housing 57. When cam 61 is in correspondence of one of position detectors 63, 65, 67 and 69, the detector operated by the cam sends an electric signal to a suitable control logic unit mounted on electronic board 71. In the exemplary embodiment shown in Figs. 4 and 5, position detectors 63, 65, 67 and 69 are so arranged that they detect when rotary shutter 15 of the valve is in one of the four angular positions mutually spaced apart by 90° with reference to rotation axis of shutter 15. In this way actuator 55 can detect when rotary shutter 15 takes one of the positions shown in Figs. 3A to 3G, i.e. a position where at least one of the T ducts of rotary shutter 15 is located in correspondence of (generally, aligned with) the duct of one of the inlet or delivery ports 17, 19, 21 and 23 of valve 9, or ports 17', 19', 21' and 23' of valve 11, respectively.

Through wires 73, 75, actuator 55 can receive information or control signals from the outside, from different devices, such as for instance thermostats, flow switches, pressure switches, photoelectric cells, end-of-stroke detectors, heat counters, external control units and so on, so as to suitably and automatically operate e.g. system 1 described above.

In the exemplary embodiment shown in Fig. 5, position detectors 63, 65, 67 and 69 send the electric signals to electronic board 71 through signal lines 77, 79, 81 and 83. Each said signal line can consist of a wire of an electrically conducting material: this enables modifying the operation of actuator 55 merely by exchanging, or generally shifting, the connections of wires 77, 79, 81 and 83 to electronic board 71 or to the logic unit mounted thereon, without need of programming again or replacing the same logic unit, for instance, when such a logic unit is a processor governed by a control software stored on an ROM (Read Only Memory). Electric wires 77, 79, 81 and 83, or other signal lines, can be connected to signal gates of the logic unit suitably arranged for reversible connections, such as for instance plug-and-socket couplings, quick couplings, spring connectors, screw ("mammoth") connectors and so on.

Preferably, but not necessarily, the rotary shutters of valves 9, 11 according to the invention are of the "full flow" kind, that is, they internally define ducts whose flow sections substantially are not smaller than the flow sections of the ducts formed in their respective external valve bodies 13, 13. This limits flow resistance of fluids passing though said valves.

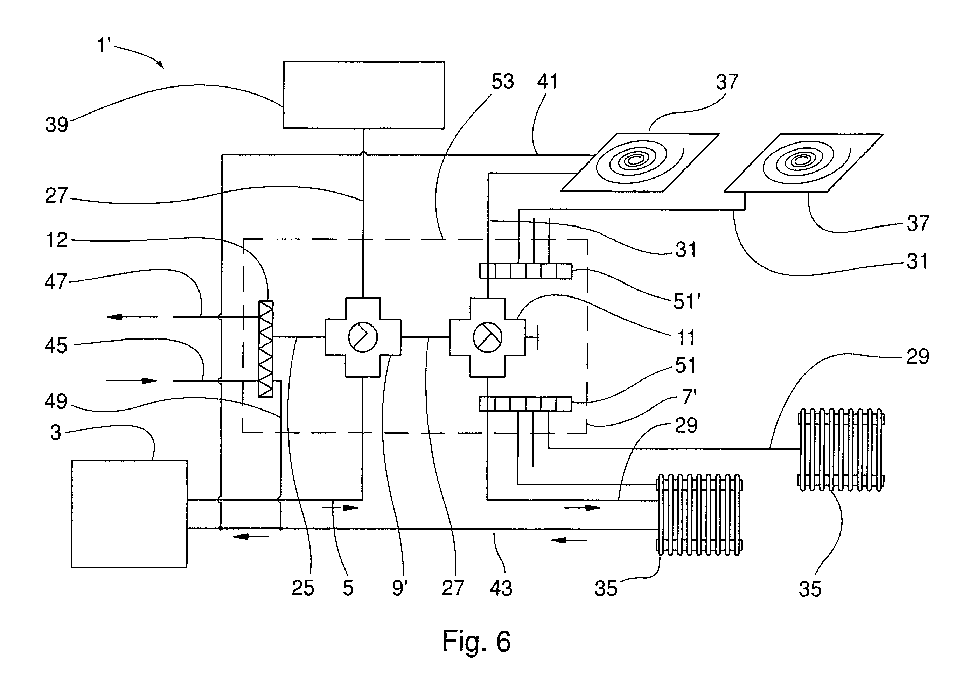

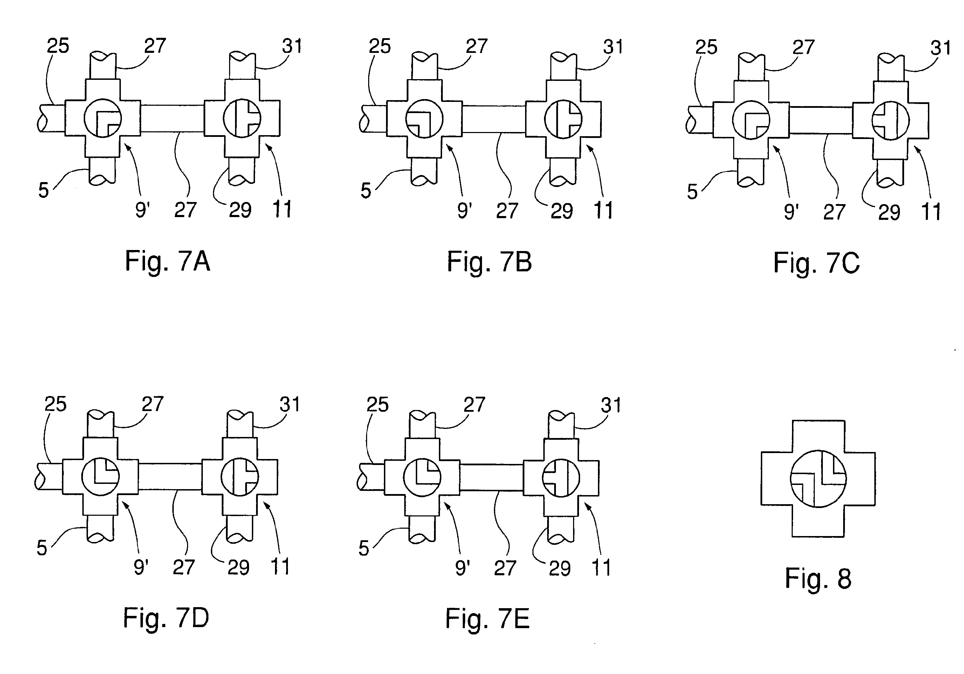

Figs. 6 and 7A to 7E relate to a second exemplary embodiment of an air conditioning system according to the present invention. Such a system 1', besides providing winter season heating and delivery of sanitary hot water, allows cooling rooms or other housing spaces during the summer months.

In such a system 1', upstream distribution valve 9' is a four-way valve with rotary shutter, e.g. a ball shutter. Differently from the system shown in Fig. 1, the rotary shutter of valve 9' internally defines an L-shaped channel, or generally a single channel, in order to allow fluid passing therethrough to flow to only one connection port at a time.

Upstream distribution valve 9' can be obtained for instance by replacing, in motor driven valve 9 shown in Figs. 4 and 5 described above, the shutter with internal T-shaped channels by a shutter with internal L-shaped channel.

Reference numeral 39 denotes a source of refrigerating fluid, e.g. a refrigerating system suitably cooling water or another refrigerating fluid, a branch of a water system or another source of water, or another fluid, not heated on purpose.

The operation of system 1' is as follows.

If neither delivery of sanitary hot water, nor feeding of conditioning terminals 35 and 37 with conditioning fluid (e.g. heating hot water) are desired in the heating mode (Figs. 7A, 7B and 7C), rotary shutters of valves 9' and 11' are in the positions shown in Fig. 7A. The rotary shutter of valve 9' directs the whole flow of heating hot water, coming from generator 3 of heating hot water, towards downstream distribution valve 11, which is closed.

In the operating condition shown in Fig. 7B, the only production of sanitary hot water takes place: the rotary shutter of valve 9' directs the whole flow of heating hot water towards heat exchanger 12 for generating sanitary hot water, whereas downstream distribution valve 11 is closed.

In the operating condition shown in Fig. 7C, the only heating of the rooms takes place, by feeding conditioning terminals 35 and 37 only: the rotary shutter of valve 9' directs the whole flow of heating hot water towards downstream distribution valve 11, which is open.

If neither delivery of sanitary water, nor feeding of conditioning terminals 37 (e.g. floor or wall radiating panels, or fan-convectors) with conditioning fluid (e.g. cold or cooled water) are desired in cooling mode (Figs. 7D, 7E), rotary shutters of valves 9' and 11' are in the positions shown in Fig. 7D: the rotary shutter of valve 9' directs the whole flow of cold or cooled water, coming from refrigerating fluid source 39, towards downstream distribution valve 11, which is closed.

With the configuration shown in Fig. 7B, production of sanitary hot water only takes place.

In the operating condition shown in Fig. 7E, the only cooling of the rooms takes place, by feeding air conditioning terminals 37 only: the rotary shutter of valve 9' directs the whole flow of cold or cooled water towards downstream distribution valve 11, which is open.

It is apparent from the above description that, in the system shown in Fig. 6, production of sanitary hot water is alternative to and takes priority over heating or cooling of the rooms. Moreover, it is apparent that a great number of operation modes are achieved by two valves only, with rotary or generally movable shutter. Moreover, with minimal changes with respect to the system shown in Fig. 1, both heating and summer cooling of rooms can be performed.

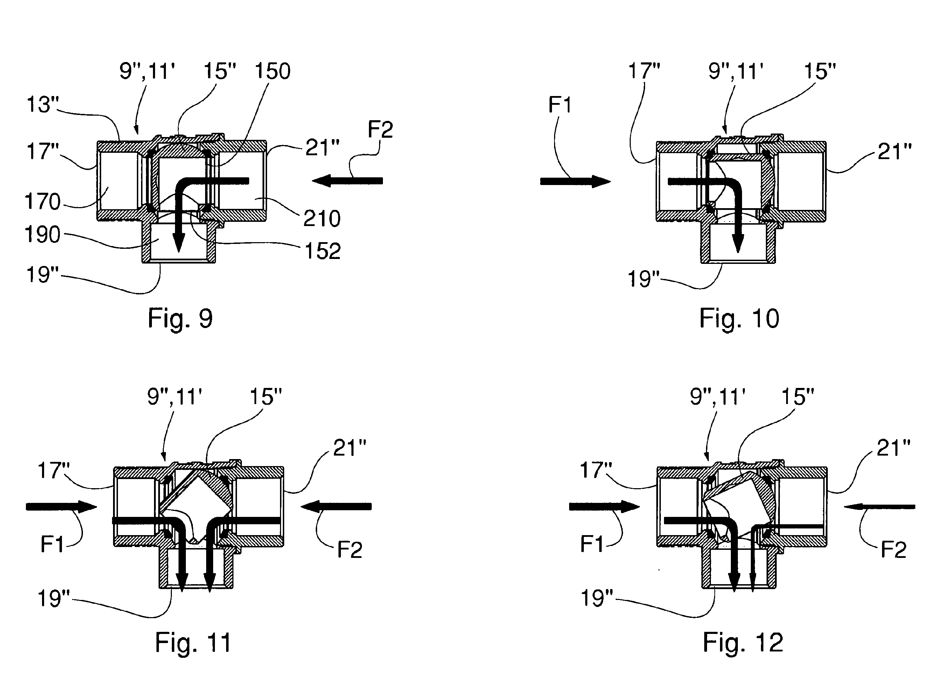

Figs. 9 to 13 show a second particular exemplary embodiment of an upstream or a downstream distribution valve 9" or 11' that can be used in a system according to the present invention.

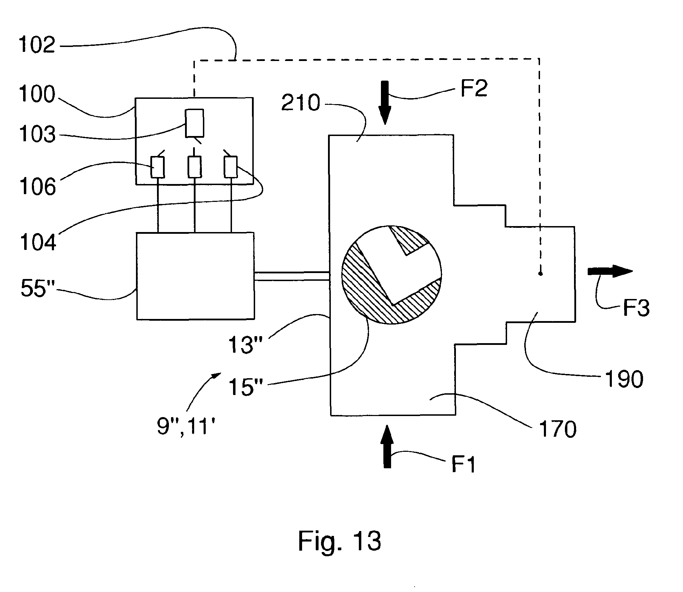

In the exemplary embodiment shown, such a valve 9" or 11' is a three-way valve, has an external valve body 13" and a ball rotary shutter 15", housed within valve body 13" and internally defining an L-shaped channel. Reference numerals 150 and 152 denote the ports, referred to in the present description as "shutter ports", through which the L-shaped channel emerges at the outer surface of ball shutter 15". Reference numerals 170, 190 and 210 denote the ducts formed within valve body 13", which are referred to in the present description as "valve body ducts". The ports through which valve body ducts 170, 190 and 210 communicate with the outside of the same valve body 13" form the three connection ports 17", 19", 21" through which valve 9", 11' can be fluidically connected to the rest of a fluidic circuit. Valve 9", 11' is further equipped with an actuator 55" (Fig. 13) arranged to operate movable shutter 15" by making it rotate on itself. Actuator 55" can e.g. comprise an electric motor.

In this particular embodiment of a valve according to the invention, actuator 55", the valve body and the shutter are arranged in order actuator 55" can rotate shutter 15" so that:
- both shutter ports 150 and 152 simultaneously open on a first and the same valve body duct (in the example shown in Figs. 11 and 12, duct 190);
- at the same time, each shutter port 150 and 152 opens on a respective second valve body duct, different from the first and the same valve body duct.

In the example shown in Figs. 11 and 12, shutter port 150 opens on duct 170, besides opening on duct 190, and shutter port 152 opens on duct 210, besides opening on duct 190. In the configuration shown in Fig. 11, shutter 15" is symmetrically arranged relative to inlet ducts 170 and 210 and delivery duct 190, and thus it mixes the inlet flows in substantially the same proportions. In the configuration shown in Fig. 12, shutter 15" is asymmetrically arranged, and thus it mixes the inlet flows in different proportions. In the configuration shown in Figs. 9 and 10, no flow mixing takes place, shutter 15" wholly closes one of inlet ducts 170 or 210 and directs only the flow of the other inlet duct (210 or 170, respectively) to delivery duct 190.

The valve body and the rotary shutter are suitably shaped and sized in order to attain the above results.

In the exemplary embodiment shown in Figs. 9 to 12, shutter ports 150 and 152 are substantially mutually spaced apart by 90°, and valve body ducts 170, 190 and 210 are arranged so as to form a T. In that case, actuator 55" is capable of rotating shutter 15" not only through angles being multiple of 90°, but also through finer rotations, possibly through a continuously variable rotation.

Advantageously, electrically driven valve 9", 11' is automatically controlled by a control system based on the temperature of the mixed fluid. Such a possibility is shown in Fig. 13. There, arrows F1, F2 and F3 denote the directions of the fluid flows to be mixed (e.g., hot water and cold water) arriving at valve 9", 11', and of the mixed fluid leaving the valve, respectively. The temperature of the mixed fluid is sensed downstream valve 9", 11' and sent to control unit 100 through signal line 102. The control unit is arranged to operate shutter 15" so that mixed fluid at the desired temperature is obtained in outlet duct 190 of valve 9", 11'. In the present exemplary embodiment, the control unit is equipped with a three-contact thermostat 103 (having a first contact adjusted to the minimum temperature the mixed fluid can have, a second contact adjusted to the ideal temperature the mixed fluid must have, and a third contact adjusted to the maximum temperature the mixed fluid can have), a minimum temperature relay 104 and a maximum temperature relay 106. The operation of such a control unit is as follows.

If the temperature of the mixed fluid detected by the assembly of the probe and signal line 102 is equal to or lower than the minimum allowed temperature, thermostat 103 actuates minimum temperature relay 104 which, in turn, actuates electric motor 55" to rotate ball shutter 15" so as to increase downstream inflow of hot water and reduce downstream inflow of cold water. When the temperature of the mixed fluid reaches the desired ideal temperature, the second contact in thermostat 103 stops motor 55" in the position reached. Conversely, if the temperature of the mixed fluid detected by the assembly of the probe and signal line 102 is equal to or higher than the maximum allowed temperature, thermostat 103 actuates maximum temperature relay 106 which, in turn, actuates electric motor 55" to rotate ball shutter 15" so as to increase downstream inflow of cold water and reduce downstream inflow of hot water. When the temperature of the mixed fluid reaches the desired ideal temperature, the second contact in thermostat 103 stops motor 55" in the position reached. Control unit 100 in the present example implements therefore a control of the kind "one-zero-minus one", which is very simple and cheap to implement and has given good results in terms of flow mixing effectiveness. Obviously, actuator 55" can be controlled also by means of different control systems, e.g. by linear or non linear controls, PID's, in open loop, etc. Moreover, logic unit 100 can be implemented for instance by means of wired logic circuits which do not necessarily use relays but can be of a different type, or by processors or generally programmable logic circuits.

The valve just described has given good results in terms of effectiveness and precision in mixing two different flows. Moreover, it gives rise to very limited flow resistance, contrary to other kinds of valves, such as for instance plunger mixing valves, which currently are the most frequently used valves.

Valve 9", 11' described above can be used not only for mixing two flows of liquids or other incoming fluids, but also for dividing an incoming fluid (arriving e.g. through duct 190) into two different fluids outgoing e.g. through ducts 170, 210.

The exemplary embodiments described above can undergo several changes and modifications without departing from the scope of the present invention as defined by the appended claims.

For instance, hot water to be used for heating can be replaced by a more generic conditioning fluid. Sanitary hot water can be replaced by a drinking, non-toxic or non-infecting fluid, or still more generally, by an expendable fluid. The rotary shutters of distribution valves 9, 11 described above can define not only two internal ducts intersecting so as to form substantially a T, but also one or two internal ducts forming an L or still other configurations. The rotary shutters of valves 9, 11 can also have a single distribution channel extending transversally to the rotation axis of the same shutter, and have cross sections, taken along section planes parallel to the rotation axis and transversal to the distribution channel, which are substantially C-shaped or are generally open, whereas rotary shutters 15, 15' shown in Fig. 2 have some cross sections, taken along section planes parallel to the rotation axis and transversal to the distribution channel, which are substantially O-shaped or are generally closed. Rotary shutters 15, 15' of valves 9, 11 can also be spherical rotary shutters, or even non-rotary shutters, e.g. slide shutters. Four-way distribution valves 9 and 11 described above can be replaced by three- or five-way valves or by valves with more than five or less than three ways, possibly by replacing each valve 9, 11 by an assembly of valves with two or more than two ways and having an equivalent fluidic behaviour. Motor-driven distribution valves 9, 11 described above can be replaced by manually operated valves, e.g. lever-operated valves. Distribution valves 9 and 11 can also be made as an assembly of two rotary or non-rotary shutters 15, 15', housed within a single common external valve body. Each distribution valve 9 and 11 can also be made as a double-L valve (Fig. 8), obviously provided that the fluidic circuit where the valves are inserted is suitably made. Heat exchanger 12 can be replaced by other kinds of generators of sanitary hot water, e.g. by suitable mixing valves, mixing heating water with other water at lower temperature or possibly directly supplying non-mixed heating water, or by an accumulator-boiler. Still more generally, heat exchanger 12 can be replaced by a sanitary generator, arranged to supply a suitable expendable fluid, hot or heated to the required temperature.

The examples and the lists of possible variants of the present application mentioned above are to be intended as non-exhaustive examples and lists.

## Claims

1. A distribution valve (9, 11), including:
- an external valve body (13, 13', 13") defining a plurality of connection ports (17, 19, 21, 23, 17', 19', 21', 23', 17", 19", 21") through which the distribution valve (9, 11) can be fluidically connected to the rest of a fluidic system;
- a movable shutter (15, 15'), housed within the valve body (13. 13') and arranged to switch, when moving, a flow of a fluid inside the external valve body (13, 13') from one (23) of the connection ports to another (19') of the connection ports;
- a actuator (55), arranged to operate the movable shutter (15, 15'); wherein the distribution valve (9, 11) is a valve with three or more than three ways;
said valve being **characterised**
**in that** said movable shutter (15, 15') is equipped with a cam profile (61), substantially integral with the same shutter, and the valve (9, 11) further includes a position detector (63, 65, 67, 69) arranged to detect the position of the movable shutter (15, 15') relative to the external valve body (13, 13', 13") by detecting the cam profile (61); and
**in that** said valve includes a logic unit arranged to operate the movable shutter (15, 15') through the actuator (55, 55") according to information about the position of the movable shutter (15, 15') supplied by the position detector (63, 65, 67, 69).

2. The valve as claimed in claim 1, wherein said actuator (55) includes a housing (57) enclosing an electric motor and a speed reducer, acting on a shaft (59) integral or generally mechanically coupled to said movable shutter (15) of said valve.

3. The valve as claimed in claim 2, wherein said cam profile (61) is provided on said shaft (59) and said valve comprises a plurality of position detectors (63, 65, 67, 69) which are provided around said shaft (59), on a suitable support integral with said housing (57); each of said position detector (63, 65, 67, 69) being arranged for being operated by said cam profile (61) so that said position detector (63, 65, 67, 69) sends an electric signal to the control logic unit, mounted on an electronic board (71), when said cam profile (61) is next to said position detector (63, 65, 67, 69).;

4. The valve as claimed in claim 3, wherein said position detectors are end-of-stroke or contact or proximity detectors (63, 65, 67, 69).

5. The valve as claimed in claim 3 or 4, wherein said position detectors (63, 65, 67, 69) are arranged for sending the electric signals to said electronic board (71) through signal lines (77, 79, 81, 83).

6. The valve as claimed in claim 5, wherein each of said signal lines (77, 79, 81, 83) consist of a wire of an electrically conducting material

7. The valve as claims in claim 5 or 6, wherein said signal lines (77, 79, 81, 83) are connected to signal gates of the logic unit suitably arranged for reversible connections.

8. The valve (9, 11) as claimed in any of the preceding claims, wherein the movable shutter (15, 15') is a rotary shutter.

9. The valve (9, 11) as claimed in any of the preceding claims, wherein the movable shutter (15, 15') is a ball shutter.

10. The valve (9, 11) as claimed in one or more of the preceding claims, wherein the movable shutter (15, 15') internally defines two ducts intersecting so as to form a T-shaped or an X-shaped intersection.

11. The valve (9, 11) as claimed in one or more of the preceding claims, wherein the movable shutter (15, 15') internally defines a duct forming a bend and/or following a substantially L-shaped or double-L shaped path, and/or a single duct, so as to enable the liquid passing through the duct to flow to only one connection port at a time.

12. The valve (9, 11) as claimed in claim 11, wherein the external valve body (13, 13', 13") internally defines at least three valve body ducts (170, 190, 210), each communicating with the outside through one of the connection ports (17", 19", 21"), and wherein the internal duct of the movable shutter (15') communicates with the outside through two shutter ports (150, 152), whereby the movable shutter can be positioned so that it:
- simultaneously opens both shutter ports (150, 152) on a first and the same valve body duct (190), and, at the same time,
- opens each shutter port (150, 152) on a second valve body duct (170, 210), different from the first and the same valve body duct (190), so as to mix together, in the first and the same valve body duct (190), the different flows coming from each second valve body duct (170, 210).

13. The valve (9, 11) as claimed in one or more of the preceding claims, wherein said logic unit is arranged to operate the movable shutter (15, 15') through the actuator (55, 55") according to the detection of physical and/or chemical parameters of the fluid upstream and/or downstream and/or within the same valve (9, 9', 9", 11, 11').

14. The valve as claimed in any of the preceding claims, wherein the logic unit implements a control process comprising the following steps:
- detecting a physical and/or chemical parameter of the fluid upstream and/or downstream and/or within the same valve (9", 11);
- if the detected physical and/or chemical parameter is below a predetermined minimum threshold value, rotating the movable shutter (15") in a first predetermined direction;
- if the detected physical and/or chemical parameter exceeds a predetermined maximum threshold value, rotating the movable shutter (15") in a second predetermined direction.

15. An air conditioning system for supplying a conditioning fluid, the system including a distribution unit (53) in turn including two distribution valves (9, 11) according to any of the preceding claims, wherein each of said valves is equipped with a movable shutter (15, 15') and substantially being a valve with at least three ways, and wherein one (15) of the movable shutters is arranged to switch the conditioning fluid flow towards the other movable shutter (15').

16. The system as claimed in claim 15, further comprising:
a plurality of delivery ports (17', 19, 21, 21');
a sanitary generator (12), arranged to supply an expendable fluid, hot or heated to the required temperature.;
an intervalve duct (27), arranged to feed one of the distribution valves (9, 11) with the conditioning fluid coming from the other distribution valves (9, 11);
a distribution container (53), housing both distribution valves (9, 11) the sanitary generator (12), and said intervalve duct (27); and
an air conditioning terminal (35, 37) arranged to heat a space by means of a heat exchange between the space and the conditioning fluid, and said distribution unit (53) is arranged to reversibly enable or prevent delivery of the conditioning fluid to the air conditioning terminal (35, 37) through the distribution valves (9, 11).

17. The system as claimed in claim 16, including a plurality of air conditioning terminals (35, 37), wherein one of the terminals is fed through one way of one of the distribution valves (9, 11) and another conditioning terminal (35, 37) is fed through another way of one of the distribution valves (9, 11).

18. The system as claimed in claim 16 or 17, wherein the air conditioning terminals (35, 37) include an element chosen out of the following group: a radiator (35); a towel heater; a radiating panel (37) installed in a floor, wall or ceiling, a warm air or cold air generator.

19. The system as claimed in one or more of claims 15 to 18, wherein the shutter (15, 15') of one of the distribution valves (9, 11) is arranged to select and enable simultaneous delivery of conditioning fluid through two different ways of one of the distribution valves (9, 11).

20. The system as claimed in one or more of claims 15 to 19, wherein the shutter (15, 15') of one of the distribution valves (9, 11) is arranged to select and enable delivery of conditioning fluid through a single way of one of the distribution valves (9, 11).

## Patentansprüche

1. Verteilerventil (9, 11), mit:
- einem externen Ventilkörper (13, 13', 13"), der mehrere Anschlüsse (17, 19, 21, 23, 17', 19', 21', 23', 17", 19", 21") definiert, durch die das Verteilerventil (9, 11) strömungstechnisch an den Rest eines strömungstechnischen Systems angeschlossen werden kann;
- einem beweglichen Verschluss (15, 15'), der in dem Ventilkörper (13, 13') untergebracht und angeordnet ist, um bei Bewegung einen Strom eines Fluids in dem äußeren Ventilkörper (13, 13') von einem (23) der Anschlüsse zu einem anderen (19') der Anschlüsse zu schalten;
- einen zum Betätigen des beweglichen Verschlusses (15, 15') angeordneten Aktor (55);
wobei das Verteilerventil (9, 11) ein Drei- oder Mehrwegeventil ist,
**dadurch gekennzeichnet, dass** der bewegliche Verschluss (15, 15') mit einem Nockenprofil (61) versehen ist, das im Wesentlichen integral mit dem Verschluss ausgebildet ist, und wobei das Ventil (9, 11) zudem einen zum Detektieren der Position des beweglichen Verschlusses (15, 15') in Bezug auf den externen Ventilkörper (13, 13', 13") durch Detektieren des Nockenprofils (61) angeordneten Positionsdetektor (63, 65, 67, 69) aufweist; und
dass das Ventil eine Logikeinheit aufweist, die dafür vorgesehen ist, den beweglichen Verschluss (15, 15') mittels des Aktors (55, 55") nach Informationen über die Positionen des beweglichen Verschlusses (15, 15'), die von den Positionsdetektor (63, 65, 67, 69) geliefert werden, zu steuern.

2. Ventil nach Anspruch 1, **dadurch gekennzeichnet, dass** der Aktor (55) ein Gehäuse (57) aufweist, das einen Elektromotor und einen Drehzahlminderer umgibt, die auf eine Welle (59) einwirken, die integral mit dem beweglichen Verschluss (15) des Ventils ausgebildet oder im Wesentlichen mechanisch mit ihm gekoppelt ist.

3. Ventil nach Anspruch 2, **dadurch gekennzeichnet, dass** das Nockenprofil (61) an der Welle (59) vorgesehen ist und das Ventil mehrere Positionsdetektoren (63, 65, 67, 69) aufweist, die um dem Schaft (59) herum auf einem geeigneten Träger, der integral mit dem Gehäuse (57) ausgebildet ist, angeordnet sind; wobei jeder der Positionsdetektoren (63, 65, 67, 69) zur Betätigung durch das Nockenprofil (61) angeordnet ist, so dass der Positionsdetektor (63, 65, 67, 69) ein elektrisches Signal zu der auf eine Leiterplatte (71) montierten Logikeinheit aussendet, wenn das Nockenprofil (61) dem besagten Positionsdetektor (63, 65, 67, 69) am nächsten ist.

4. Ventil nach Anspruch 3, **dadurch gekennzeichnet, dass** Positionsdetektoren Endlagen- oder Kontakt- oder Nährungsdetektoren (63, 65, 67, 69) sind.

5. Ventil nach Anspruch 3 oder 4, **dadurch gekennzeichnet, dass** die Positionsdetektoren (63, 65, 67, 69) ausgebildet sind, um elektrische Signale zu der Leiterplatte (71) über Signalleitungen (77, 79, 81, 83) zu senden.

6. Ventil nach Anspruch 5, **dadurch gekennzeichnet, dass** jede der Signalleitungen (77, 79, 81, 83) aus einem Draht aus einem elektrisch leitenden Material besteht.

7. Ventil nach Anspruch 5 oder 6, **dadurch gekennzeichnet, dass** die Signalleitungen (77, 79, 81, 83) an Signaltore der Logikeinheit, die für reversible Anschlüsse geeignet angeordnet sind, angeschlossen sind.

8. Ventil (9, 11) nach einem der vorstehenden Ansprüche, **dadurch gekennzeichnet, dass** der bewegliche Verschluss (15, 15') eine Drehlappe ist.

9. Ventil (9, 11) nach einem der vorstehenden Ansprüche, **dadurch gekennzeichnet, dass** der bewegliche Verschluss (15, 15') ein kugelförmiger Verschluss ist.

10. Ventil (9, 11) nach einem der vorstehenden Ansprüche, **dadurch gekennzeichnet, dass** der bewegliche Verschluss (15, 15') intern zwei Kanäle definiert, die sich schneiden und dadurch eine T-förmige oder X-förmige Kreuzung bilden.

11. Ventil (9, 11) nach einem der vorstehenden Ansprüche, **dadurch gekennzeichnet, dass** der bewegliche Verschluss (15, 15') intern einen Kanal definiert, der eine Kurve formt und/oder einem im wesentlichen L-förmigen oder Doppel L-förmigen Pfad folgt und/oder einen einzelnen Kanal definiert, so dass die durch den Kanal fließende Flüssigkeit immer nur zu einem der Anschlüsse fließen kann.

12. Ventil (9, 11) nach Anspruch 11, **dadurch gekennzeichnet, dass** der externe Ventilkörper (13, 13', 13") intern mindestens drei Ventilkörperkanäle (170, 190, 210) definiert, die jeweils mit der Außenseite durch einen der Anschlüsse (17", 19", 21") in Verbindung stehen, und wobei der interne Kanal des beweglichen Verschlusses (15') mit der Außenseite über zwei Verschlussanschlüsse (150, 152) in Verbindung steht, wobei der bewegliche Verschluss so positioniert werden kann, dass er:
- zugleich beide Verschlussanschlüsse (150, 152) an einem ersten und demselben Ventilkörperkanal (190) öffnet, und zugleich,
- jeden Verschlussanschluss (150, 152) an einem zweiten Ventilkörperkanal (170, 210) öffnet, der sich von dem ersten und selben Ventilköperkanal (190) unterscheidet, so dass in dem ersten und selben Ventilkörperkanal (190) die verschiedenen Strömungen, die von jedem zweiten Ventilkörperkanal (170, 210) kommen, vermischt werden.

13. Ventil (9,11) nach einem der vorstehenden Ansprüche, **dadurch gekennzeichnet, dass** die Logikeinheit dafür ausgelegt ist, den beweglichen Verschluss (15, 15') über den Aktor (55, 55") in Abhängigkeit von der Detektion von physikalischen und/oder chemischen Parametern des Fluids stromaufwärts und/oder stromabwärts und/oder in demselben Ventil (9, 9', 9", 11, 11') zu steuern.

14. Ventil nach einem der vorstehenden Ansprüche, **dadurch gekennzeichnet, dass** die Logikeinheit ein Steuerverfahren mit den folgenden Schritten durchführt:
- Detektieren eines physikalischen und/oder chemischen Parameters des Fluids stromaufwärts und/oder stromabwärts und/oder in demselben Ventil (9", 11);
- wenn der detektierte physikalische und/oder chemische Parameter unter einem vorgegebenen minimalen Schwellenwert liegt, der bewegliche Verschluss (15") in eine erste vorgegebene Richtung gedreht wird;
- wenn der detektierte physikalische und/oder chemische Parameter einen vorgegebenen maximalen Schwellenwert übersteigt, der bewegliche Verschluss (15") in eine zweite vorgegebene Richtung gedreht wird.

15. Klimaanlage zum Bereitstellen einer Betriebsflüssigkeit, wobei das System eine Verteilereinheit (53) aufweist, die jeweils zwei Verteilerventile (9, 11) nach einem der vorstehenden Ansprüche aufweist, wobei jedes dieser Ventile mit einem beweglichen Verschluss (15, 15') ausgestattet ist und im Wesentlichen einen Drei- oder Mehrwegeventil ist, und wobei einer (15) der beweglichen Verschlüsse zum Schalten des Stroms der Betriebsmittelflüssigkeit auf den anderen beweglichen Verschluss (15') angeordnet ist.

16. System nach Anspruch 15, **gekennzeichnet durch**:
- mehreren Austrittsöffnungen (17', 19, 21, 21'),
- einem hygienischen Erzeuger (12), der dafür ausgebildet ist, eine heiße oder auf die benötigte Temperatur erhitzte Verbrauchsflüssigkeit zu liefern;
- einem Zwischenventilkanal (27), der dafür ausgebildet ist, eines der Verteilerventile (9, 11) mit der Betriebsflüssigkeit, die von dem anderem Verteilerventil (9, 11) kommt, zu versorgen;
- einem Verteilerbehälter (53), der die beiden Verteilerventile (9, 11), den hygienischen Erzeuger (12) und den Zwischenventilkanal (27) enthält; und
- einem Klimagerät (35, 37), das dafür ausgebildet ist, einen Raum **durch** einen Wärmetausch zwischen dem Raum und der Betriebsflüssigkeit zu beheizen, wobei die Verteilereinheit (53) dafür vorgesehen ist, reversibel die Zufuhr der Betriebsflüssigkeit zu dem Klimagerät (35, 37) **durch** die Verteilerventile (9, 11) zu ermöglichen oder zu verhindern.

17. System nach Anspruch 16, **gekennzeichnet durch** mehrere Klimageräte (35, 37), wobei eines der Klimageräte über einen Weg von einem der Verteilerventile (9, 11) und das andere Klimagerät (35, 37) über einen anderen Weg von einem der Verteilerventile (9, 11) versorgt wird.

18. System nach Anspruch 16 oder 17, **dadurch gekennzeichnet, dass** die Klimageräte (35, 37) ein Element aufweisen, das aus der folgenden Gruppe ausgewählt ist: ein Radiator (35), ein Handtuchwärmer, eine Abstrahlplatte (37), die in einem Fußboden, einer Wand oder einer Decke installiert ist, ein Warm- oder Kaltlufterzeuger.

19. System nach einem der Ansprüche 15 bis 18, **dadurch gekennzeichnet, dass** der Verschluss (15, 15') von einem der Verteilerventile (9, 11) dafür ausgebildet ist, eine simultane Förderung der Betriebsflüssigkeit durch zwei verschiedene Wege von einem der Verteilerventile (9, 11) auszuwählen und zu ermöglichen)

20. System nach einem der Ansprüche 15 bis 19, **dadurch gekennzeichnet, dass** der Verschluss (15, 15') von einem der Verteilerventile (9, 11) dafür ausgebildet ist, eine Versorgungen mit Betriebsflüssigkeit durch einen einzigen Weg eines der Verteilerventile (9, 11) auszuwählen und zu ermöglichen.

## Revendications

1. Soupape de distribution (9, 11), comprenant :
- un corps de soupape externe (13, 13', 13") définissant une pluralité d'orifices de raccordement (17, 19, 21, 23, 17', 19', 21', 23', 17", 29", 21") à travers lesquels la soupape de distribution (9, 11) peut être raccordée en écoulement de fluide au reste d'un système fluidique ;
- un obturateur mobile (15, 15') logé à l'intérieur du corps de soupape (13, 13') et agencé pour commuter, lors de son déplacement de position, un écoulement d'un fluide à l'intérieur du corps de soupape externe (13, 13') de l'un (23) des orifices de raccordement vers un autre (19') des orifices de raccordement ;
- un actionneur (55), agencé pour mettre en action l'obturateur mobile (15, 15') ;
dans laquelle la soupape de distribution (9, 11) est une soupape à trois voies ou à plus de trois voies ;
ladite soupape étant **caractérisée**
**en ce que** ledit obturateur mobile (15, 15') est pourvu d'un profil de came (61) essentiellement solidaire de cet obturateur, et en ce que la soupape (9, 11) comporte, de plus, un détecteur de position (63, 65, 67, 69) conçu pour détecter la position de l'obturateur mobile (15, 15') par rapport au corps de soupape externe (13, 13', 13") en détectant le profil de came (61) ; et
**en ce que** ladite soupape comporte une unité logique conçue pour mettre en action l'obturateur mobile (15, 15') par l'intermédiaire de l'actionneur (55, 55") selon une information se rapportant à la position de l'obturateur mobile (15, 15') fournie par le détecteur de position (63, 65, 67, 69).

2. Soupape selon la revendication 1, dans laquelle ledit actionneur (55) comprend une enceinte (57) contenant un moteur électrique et un réducteur de vitesse, agissant sur un arbre (59) solidaire ou couplé généralement de façon mécanique au dit obturateur mobile (15) de ladite soupape.

3. Soupape selon la revendication 2, dans laquelle ledit profil de came (61) est fourni sur ledit arbre (59) et dans laquelle ladite soupape comporte une pluralité de détecteurs de position (63, 65, 67, 69) qui sont prévus autour dudit arbre (59), sur un support approprié solidaire de ladite enceinte (57) ; chacun desdits détecteurs de position (63, 65, 67, 69) étant conçu pour être activé par ledit profil de came (61) de telle sorte que ledit détecteur de position (63, 65, 67, 69) envoie un signal électrique à l'unité logique de commande montée sur une carte électronique (71), lorsque ledit profil de came (61) se trouve à proximité dudit détecteur de position (63, 65, 67, 69).

4. Soupape selon la revendication 3, dans laquelle lesdits détecteurs de position sont des détecteurs de bout de course ou des détecteurs de contact ou de proximité (63, 65, 67, 69).

5. Soupape selon la revendication 3 ou 4, dans laquelle lesdits détecteurs de position (63, 65, 67, 69) sont conçus pour transmettre les signaux électriques à ladite carte électronique (71) par des lignes de signal (77, 79, 81, 83).

6. Soupape selon la revendication 5, dans laquelle chacune desdites lignes de signal (77, 79, 81, 83) est formée d'un fil métallique constitué d'un matériau électriquement conducteur.

7. Soupape selon la revendication 5 ou 6, dans laquelle lesdites lignes de signal (77, 79, 81, 83) sont connectées à des portes de signal de l'unité logique agencées de façon appropriée pour des connexions réversibles.

8. Soupape (9, 11) selon l'une quelconque des revendications précédentes, dans laquelle l'obturateur mobile (15, 15') est un obturateur rotatif.

9. Soupape (9, 11) selon l'une quelconque des revendications précédentes, dans laquelle l'obturateur mobile (15, 15') est un obturateur à bille.

10. Soupape (9, 11) selon l'une ou plusieurs des revendications précédentes, dans laquelle l'obturateur mobile (15, 15') définit à l'intérieur deux conduits s'entrecoupant de façon à former une intersection configurée en T ou configurée en X.

11. Soupape (9, 11) selon l'une ou plusieurs des revendications précédentes, dans laquelle l'obturateur mobile (15, 15') définit à l'intérieur un conduit formant une courbe et/ou suivant un chemin configuré essentiellement en L ou configuré en double L, et/ou un conduit unique, de façon à permettre au liquide passant par le conduit de s'écouler vers un seul orifice de raccordement à la fois.

12. Soupape (9, 11) selon la revendication 11, dans laquelle le corps de soupape externe (13, 13', 13") définit à l'intérieur au moins trois conduits de corps de soupape (170, 190, 210), chacun communiquant avec l'extérieur par l'un des orifices de raccordement (17", 19", 21"), et dans laquelle le conduit interne de l'obturateur mobile (15') communique avec l'extérieur par deux orifices de l'obturateur (150, 152), de sorte que l'obturateur mobile peut être positionné de façon à ce que :
- il ouvre simultanément les deux orifices de l'obturateur (150, 152) sur un premier et même conduit de corps de soupape (190), et, en même temps,
- il ouvre chaque orifice de l'obturateur (150, 152) sur un second conduit de corps de soupape (170, 210) différent du premier et même conduit de corps de soupape (190) de façon à mélanger ensemble dans le premier et même conduit de corps de soupape (190) les différents écoulements venant de chaque second conduit de corps de soupape (170, 210).

13. Soupape (9, 11) selon l'une ou plusieurs des revendications précédentes, dans laquelle ladite unité logique est conçue pour actionner ledit obturateur mobile (15, 15') par l'intermédiaire de l'actionneur (55, 55") selon la détection de paramètres physiques et/ou chimiques du fluide en aval et/ou en amont et/ou à l'intérieur de cette soupape (9, 9', 9", 11, 11').

14. Soupape selon l'une quelconque des revendications précédentes, dans laquelle l'unité logique met en oeuvre un processus de commande comportant les étapes suivantes comprenant de :
- détecter un paramètre physique et/ou chimique du fluide en aval et/ou en amont et/ou à l'intérieur de la même soupape (9", 11) ;
- si le paramètre physique et/ou chimique détecté se situe au-dessous d'une valeur de seuil minimale prédéterminée, faire tourner l'obturateur mobile (15") dans une première direction prédéterminée ;
- si le paramètre physique et/ou chimique détecté dépasse une valeur de seuil maximale prédéterminée, faire tourner l'obturateur mobile (15") dans une seconde direction prédéterminée.

15. Système de conditionnement d'air permettant de fournir un fluide de conditionnement, le système comportant une unité de distribution (53) comprenant, à son tour, deux soupapes de distribution (9, 11) selon l'une quelconque des revendications précédentes, dans lequel chacune desdites soupapes est dotée d'un obturateur mobile (15, 15') et qui est essentiellement une soupape à au moins trois voies, et dans lequel l'un (15) des obturateurs mobiles est conçu pour commuter le flux de fluide de conditionnement vers l'autre obturateur mobile (15').

16. Système selon la revendication 15 comprenant, de plus,
une pluralité d'orifices de distribution (17', 19, 21, 21') ;
un générateur sanitaire (12) conçu pour fournir un fluide consommable, chaud ou chauffé à la température requise ;
un conduit entre soupapes (27) agencé pour fournir à l'une des soupapes de distribution (9, 11) le fluide de conditionnement venant des autres soupapes de distribution (9, 11) ;
un conteneur de distribution (53) logeant les deux soupapes de distribution (9, 11), le générateur sanitaire (12) et ledit conduit entre soupapes (27) ; et
un terminal de conditionnement d'air (35, 37) conçu pour chauffer un espace au moyen d'un échange thermique entre l'espace et le fluide de conditionnement, et ladite unité de distribution (53) est conçue pour permettre ou empêcher, de façon réversible, la distribution du fluide de conditionnement au terminal de conditionnement d'air (35, 37) par l'intermédiaire des soupapes de distribution (9, 11).

17. Système selon la revendication 16, comportant une pluralité de terminaux de conditionnement d'air (35, 37) dans lequel l'un des terminaux est alimenté par une voie de l'une des soupapes de distribution (9, 11) et dans lequel un autre terminal de conditionnement (35, 37) est alimenté par une autre voie de l'une des soupapes de distribution (9.11).

18. Système selon la revendication 16 ou 17, dans lequel les terminaux de conditionnement d'air (35, 37) comprennent un élément choisi parmi le groupe suivant : un radiateur (35) ; un chauffe-serviette ; un panneau rayonnant (37) installé dans un sol, une paroi ou un plafond, un générateur d'air chaud ou d'air froid.

19. Système selon l'une ou plusieurs des revendications 15 à 18, dans lequel l'obturateur (15, 15') de l'une des soupapes de distribution (9, 11) est conçu pour sélectionner et permettre une distribution simultanée de fluide de conditionnement par deux voies différentes de l'une des soupapes de distribution (9, 11).

20. Système selon l'une ou plusieurs des revendications 15 à 19, dans lequel l'obturateur (15, 15') de l'une des soupapes de distribution (9, 11) est conçu pour sélectionner et permettre une distribution du fluide de conditionnement par une seule voie de l'une des soupapes de distribution (9, 11).
